# EUROPÄISCHE PATENTSCHRIFT

(11) **EP 2 291 309 B1**
(45) Veröffentlichungstag und Bekanntmachung des Hinweises auf die Patenterteilung: **01.02.2012**
(21) Anmeldenummer: 09768836.0
(22) Anmeldetag: 18.06.2009
(51) Int. Cl.: B62D 33/06

(54) **AUFHÄNGUNGSEINRICHTUNG MIT AKTIVEM WATTGESTÄNGE**
SUSPENSION DEVICE HAVING ACTIVE WATT LINKAGE
DISPOSITIF DE SUSPENSION AVEC TRINGLERIE DE WATT ACTIVE

(30) Priorität: 27.06.2008 DE 102008002697
(43) Veröffentlichungstag der Anmeldung: 09.03.2011
(73) Patentinhaber: ZF Friedrichshafen AG, 88038 Friedrichshafen (DE)
(72) Erfinder: HAEUSLER, Felix, 49074 Osnabrück (DE); GÄRTNER, Andreas, 71638 Ludwigsburg (DE); LANGHORST, Friedhelm, 49356 Diepholz (DE); QUAING, Matthias, 48488 Emsbüren (DE)
(86) Internationale Anmeldenummer: PCT/DE2009/050032
(87) Internationale Veröffentlichungsnummer: WO 2009/155912

(56) Entgegenhaltungen:
- EP-A- 0 190 978
- DE-A1-102005 043 998

## Beschreibung

Die Erfindung betrifft eine Aufhängungseinrichtung zur federnden bzw. stoßdämpfenden Aufhängung eines Massekörpers in Form einer Fahrerkabine, gemäß dem Oberbegriff des Patentanspruchs 1.

Aufhängungseinrichtungen der eingangs genannten Art kommen beispielsweise, jedoch keineswegs ausschließlich, bei Lastkraftwagen und ähnlichen Schwerlastfahrzeugen zum Einsatz, um die Fahrerkabine bezüglich Schwingungen und Bewegungen vom Fahrzeugchassis zu entkoppeln. Da bei Schwerlastfahrzeugen die Feder- und Dämpferraten der Feder/Dämpfereinheiten des Fahrwerks aufgrund der hohen Fahrzeuglasten sowie aufgrund der hohen ungefederten Massen im Fahrwerk unvermeidlich hoch ausfallen, werden Fahrbahnunebenheiten oder auch Schwingungen aus Achsen und Antriebsstrang zu einem erheblichen Teil noch über die Achsfederung auf das Chassis und von dort auch auf die Fahrerkabine übertragen.

Um im Sinne der Ergonomie und des Arbeitsschutzes für den Fahrer die Übertragung derartiger Stöße und Vibrationen auf das Fahrerhaus und somit auf den Arbeitsplatz des Fahrers zu minimieren, sind Fahrerhausaufhängungen entwickelt worden, bei denen das Fahrerhaus bzw. die Fahrerkabine unter Verwendung eines eigenen Aufhängungssystems am Fahrzeugchassis abgestützt ist. Solche Aufhängungssysteme für die Fahrerkabine können dank der im Vergleich zum Fahrzeug viel geringeren Masse der Fahrerkabine mit erheblich niedrigeren Federraten als die Achsaufhängung ausgelegt werden, weshalb Fahrbahnunebenheiten bzw. aus Antriebsstrang oder Achsen des Fahrzeugs stammende Schwingungen dank solcher Kabinen-Aufhängungssysteme deutlich besser vom Arbeitsplatz des Fahrers isoliert bzw. ferngehalten werden können.

Um bei derartigen, elastischen Kabinen-Aufhängungsvorrichtungen das unerwünschte, seitliche Wanken der Fahrerkabine relativ zum Fahrzeugchassis einzuschränken - beispielsweise bei Schräg- oder Kurvenfahrt, aber auch beispielsweise im Fall einseitiger Fahrbahnunebenheiten - sind Aufhängungsvorrichtungen entwickelt worden, bei denen zwischen der Fahrerkabine und dem Chassis eine Wattgestänge-Einrichtung angeordnet ist. Die Wattgestänge-Einrichtung sorgt dabei dafür, dass die Einfederungsbewegungen zwischen Kabine und Chassis im Wesentlichen linear erfolgen, dass also die Bewegungsfreiheitsgrade zwischen Kabine und Chassis mittels der Wattgestänge-Einrichtung auf die vertikale Einfederungsbewegung reduziert werden.

DE 10 2005 043 998 A1 beschreibt eine Aufhängungsvorrichtung nach dem Oberbegriff von Anspruch 1. Diese bekannte Aufhängungsvorrichtung umfasst in einer Ausführungsform zwei parallel angeordnete Wattgestänge, die dafür sorgen, dass Kabine und Chassis des Lkw bezüglich Wankbewegungen des Lkw um die Längsachse miteinander gekoppelt sind, während lineare Einfederungsbewegungen zwischen Kabine und Chassis entlang der Hochachse innerhalb des Chassis-Federwegs uneingeschränkt möglich sind.

Die weitgehend feste Kopplung bezüglich der Wankbewegungen zwischen Kabine und Chassis bei dieser bekannten Aufhängungsvorrichtung bietet zwar den Vorteil, dass eigenständige Wankbewegungen der Kabine relativ zum Chassis unterbunden werden. Andererseits führt dies jedoch dazu, dass das Fahrerhaus jeder vom Chassis ausgehenden Wankanregung unweigerlich folgt. Dabei ist der Wankwinkel des Fahrerhauses zumindest gleich groß, zumeist - aufgrund der Elastizitäten in der Fahrerhausbefestigung und in den Wattgestängen - jedoch sogar größer als der Winkel der vom Chassis ausgehenden Wankanregung.

Bei Kurvenfahrt, Schrägfahrt oder im Fall einseitiger Fahrbahnunebenheiten kann dies dazu führen, dass sich das Fahrerhaus zumindest genauso stark oder sogar stärker neigt als das Fahrzeugchassis. Aus Komfort- und Sicherheitsgründen wäre es jedoch wünschenswert, seitliche Neigungen des Fahrerhauses unter allen Fahrbedingungen zu unterbinden oder zumindest zu reduzieren.

Mit diesem Hintergrund ist es Aufgabe der vorliegenden Erfindung, eine Aufhängungseinrichtung zur federnden Aufhängung eines Massekörpers zu schaffen, insbesondere zur Aufhängung einer Fahrzeugkabine bei einem Lastkraftwagen, mit der sich die genannten Nachteile des Standes der Technik überwinden lassen. Insbesondere soll es die Aufhängungseinrichtung dabei ermöglichen, unerwünschte Wankbewegungen des Massekörpers bzw. der Fahrzeugkabine auch im Falle von Wankanregungen des Unterbaus bzw. des Chassis zu unterbinden.

Diese Aufgabe wird durch eine Aufhängungseinrichtung mit den Merkmalen des Patentanspruchs 1 gelöst. Bevorzugte Ausführungsformen sind Gegenstand der Unteransprüche.

Die erfindungsgemäße Aufhängungseinrichtung dient in an sich bekannter Weise der federnden Aufhängung eines Massekörpers relativ zu einem Unterbau, also beispielsweise der Aufhängung der Fahrerkabine eines Lastkraftwagens gegenüber dem Fahrzeugchassis.

In an sich ebenfalls bekannter Weise umfasst die Aufhängungseinrichtung eine zwischen Massekörper und Unterbau angeordnete Feder-/Dämpfer-Anordnung zur Dämpfung von Stößen bzw. Schwingungen, sowie ferner eine Wattgestängeanordnung mit zwei den Massekörper und den Unterbau relativbeweglich verbindenden, parallel angeordneten Wattgestängen. Die Wattgestänge dienen der Reduktion der Bewegungsfreiheitsgrade des Massekörpers gegenüber dem Unterbau, insbesondere der im Wesentlichen linearen Führung des Massekörpers entlang der Hauptstoßrichtung des Unterbaus.

Erfindungsgemäß zeichnet sich die Aufhängungseinrichtung jedoch dadurch aus, dass zumindest einer der Lenker eines Wattgestänges längenveränderlich ausgebildet ist. Die Längenveränderung des Lenkers des Wattgestänges erfolgt dabei mittels eines Aktuators.

Die erfindungsgemäße Längenverstellbarkeit zumindest eines der Lenker eines Wattgestänges der Aufhängungseinrichtung führt dazu, dass unerwünschten Wankwinkeln des Massekörpers, also beispielsweise unerwünschten seitlichen Neigungen der Fahrerkabine eines Lastkraftwagens, aktiv entgegengewirkt werden kann, indem einer der Lenker eines der Wattgestänge aktuatorisch in seiner Länge verändert wird.

Mit anderen Worten bedeutet dies, dass auf diese Weise der Winkel zwischen Massekörper und Unterbau, also beispielsweise zwischen Fahrerkabine und Chassis, aktiv verändert werden kann, um zum Beispiel im Falle von seitlichen Chassisneigungen dennoch eine vertikale Position der Fahrerkabine aufrechtzuerhalten, oder zumindest die seitliche Neigung der Fahrerkabine kleiner zu halten als diejenige des Chassis.

Die Erfindung lässt sich zunächst einmal unabhängig davon verwirklichen, auf welche Weise die Längenveränderung des Lenkers erfolgt, solange von einem entsprechenden Aktuator die im jeweiligen Anwendungsfall erforderlichen Kräfte aufgebracht werden können. So ist beispielsweise eine Längenveränderung des Lenkers durch Druckluft oder mittels eines elektrischen Antriebs denkbar. Gemäß einer besonders bevorzugten Ausführungsform der Erfindung erfolgt die Längenveränderung des Lenkers jedoch durch einen hydraulischen Aktuator. Ein hydraulischer Aktuator hat den Vorteil, dass auf kleinem Raum hohe Betätigungskräfte erzeugt werden können, und dass die gewünschte Längenveränderung des Lenkers aufgrund der Inkompressibilität von Hydrauliköl genau gesteuert und eingehalten werden kann.

Für die Erfindung ist es zunächst einmal unerheblich, wie die zwei parallelen Wattgestänge konstruktiv ausgeführt und zwischen Unterbau und Massekörper angeordnet sind, solange die zu erwartenden Belastungen aufgenommen werden können, und solange aufgrund des Abstandes der Wattgestänge ein zur Übertragung der auftretenden Wankmomente geeigneter Hebelarm gebildet ist.

Gemäß einer weiteren, bevorzugten Ausführungsform der Erfindung liegen die Gelenke der beiden Wattgestänge jedoch im Wesentlichen in einer gemeinsamen Bewegungsebene. Dies bedeutet mit anderen Worten, dass die Gelenke der beiden Wattgestänge so angeordnet sind, dass die Positionen sämtlicher Gelenke die genannte Bewegungsebene aufspannen, bzw. sämtliche Gelenke der beiden Wattgestänge im Wesentlichen in ein und derselben Ebene liegen.

Diese Ausführungsform ist insofern vorteilhaft, als hierdurch Verspannungen vermieden werden, bzw. als auf diese Weise die Generierung von Sekundärmomenten, die bei einem etwaigem Abstand zwischen den Bewegungsebenen der beiden Wattgestänge auftreten können, unterbunden wird.

Gemäß einer weiteren Ausführungsform der Erfindung sind die zwei Wattgestänge in Bezug auf ihre gemeinsame Geradführungsrichtung seitwärts versetzt angeordnet. Diese Ausführungsform erlaubt eine besonders platzsparende und kompakte Anordnung der Wattgestänge, und vergrößert zudem die konstruktive Gestaltungsfreiheit bezüglich Formgebung und Anordnung der Wattgestänge.

Nach einer weiteren, bevorzugten Ausführungsform ist der Befestigungspunkt bzw. Lagerungspunkt des zentralen Watt'schen Lenkers, der zum ersten Wattgestänge gehört, mit dem Massekörper verbunden, wohingegen der Befestigungspunkt bzw. Lagerungspunkt desjenigen Watt'schen Lenkers, der zum zweiten Wattgestänge gehört, mit dem Unterbau verbunden ist.

Auf diese Weise sind die Wattgestänge, bzw. die Lenker, aus denen sich die Wattgestänge zusammensetzen, noch kompakter und sogar in gewissem Maße ineinander verschachtelt anordenbar. Dies führt zu einer besonders kompakten Ausführung der Wattgestängeanordnung mit einer noch besseren Ausnutzung des zur Verfügung stehenden Bauraums.

Eine weitere bevorzugte Ausführungsform der Erfindung sieht vor, dass der Abstand der Drehpunkte der beiden zentralen Watt'schen Lenker größer ist als die jeweiligen Abstände der den Wattgestänge-Querschubstreben zugeordneten äußeren Anlenkpunkte der beiden Wattgestänge. Dies bedeutet mit anderen Worten, dass die gedachten Verbindungslinien zwischen den sechs Anlenkpunkten der beiden Wattgestänge nicht mehr wie bei den vorstehenden Ausführungsformen ein Parallelogramm bilden, sondern sich vielmehr einer doppelten Trapezform annähern, da die Abstände zwischen den äußeren Anlenkpunkten der beiden Wattgestänge bei dieser Ausführungsform kleiner sind als die Abstände der beiden zentralen Anlenkpunkte.

Diese Ausführungsform führt damit zu einer Verlängerung des durch den Abstand der Drehpunkte der beiden zentralen Watt'schen Lenker gebildeten Hebelarms. Dieser verlängerte Hebelarm kann somit besser zur Aufnahme von Drehmomenten, beispielsweise von Wankmomenten einer Fahrerhauskabine, herangezogen werden.

Dies bringt den Vorteil mit sich, dass bei einem gegebenen Drehmoment bzw. Wankmoment nur noch verringerte Kräfte - umgekehrt proportional zur vergrößerten Länge des zentralen Hebelarms - über die Wattgestängeanordnung übertragen werden müssen. Auf diese Weise wird eine geringere und damit masseärmere Dimensionierung der Wattgestänge möglich, wobei jedoch gleichzeitig die erheblichen Drehmomente - beispielsweise aus der Wankabstützung einer Fahrerhauskabine - in unverändertem Maße über die Wattgestängeanordnung übertragen und in den Unterbau, beispielsweise in das Chassis des Lastkraftwagens, eingeleitet werden können. Ferner werden auf diese Weise auch die verbleibenden Wankbewegungen aufgrund unvermeidlicher Elastizitäten - beispielsweise im Bereich der Wattgestänge, im Bereich der Anlenkungen der Wattgestänge am Massekörper bzw. am Unterbau, oder aber aufgrund von Nachgiebigkeiten etwa eingesetzter Elastomerlager - aufgrund der geringeren zu übertragenden Kräfte reduziert.

Gemäß einer weiteren, besonders bevorzugten Ausführungsform der Erfindung ist ferner vorgesehen, dass die den Querschubstreben der beiden Wattgestänge zugeordneten äußeren Anlenkpunkte jeweils paarweise auf einer beiden Wattgestängen gemeinsamen Schwenkachse liegen. Dies bedeutet mit anderen Worten, dass der Abstand der äußeren Anlenkpunkte zwischen den beiden Wattgestängen bei dieser Ausführungsform nicht wie bei der vorhergehenden Ausführungsform nur um ein gewisses Maß verringert ist, sondern dass dieser Abstand hier gleich null ist. Hierdurch teilen sich die äußeren Anlenkpunkte der Querschubstreben der beiden Wattgestänge insgesamt nur noch zwei Gelenkachsen, anstelle wie zuvor vier Gelenkachsen zu beanspruchen.

Auf diese Weise werden Bauelemente und damit Kosten eingespart. Ferner baut die Wattgestängeanordnung auf diese Weise besonders kompakt und bauraumsparend, und es werden konstruktiv nur noch zwei statt wie zuvor vier rahmenseitige Anbindungspunkte benötigt. Da sich die durch die beiden Watt'schen Lenker erzeugten, auf die rahmenseitigen Anbindungspunkte wirkenden Kräfte bei dieser Anordnung aufgrund vektorieller Addition teilweise gegenseitig aufheben, können die rahmenseitigen Anbindungsteile leichter und somit kostengünstiger ausgelegt werden. Ferner können beim Einsatz von Elastomerlagern reduzierte Steifigkeiten für die Elastomerlager verwendet werden, was bessere Schallisolation verspricht.

Letzteres ist insbesondere dann der Fall, wenn die Lagerung der jeweils zwei mit ihren äußeren Anlenkpunkten zusammenlaufenden Querschubstreben der beiden Wattgestänge zunächst einmal nichtelastisch - zum Zweck der vektoriellen Kraftaddition - auf einer gemeinsamen Schwenkachse erfolgt, während erst die gemeinsame Schwenkachse für sich genommen elastisch an den entsprechenden rahmenseitigen Anbindungspunkten angebunden wird.

Gemäß einer weiteren Ausführungsform der Erfindung ist ferner vorgesehen, dass die beiden im Bereich ihrer äußeren Anlenkpunkte an einer gemeinsamen Schwenkachse angelenkten Querschubstreben der beiden Wattgestänge jeweils einstückig in Form einer beispielsweise V-förmigen Kombinationsstrebe ausgebildet sind. Diese Ausführungsform, bei der zwei gemeinsam angelenkte Querschubstreben jeweils ein beispielsweise einem Dreieckslenker ähnelndes Bauteil bilden, bringt weitere konstruktive Vereinfachungen mit sich, indem die Anzahl der notwendigen Bauteile noch weitergehend reduziert wird.

Insbesondere werden nun nicht mehr vier - wie bei den vorstehenden Ausführungsformen - sondern nur noch zwei Schwenklager zur Anbindung der äußeren Anlenkpunkte der Querschubstreben benötigt. Ferner können auf diese Weise beide Wattgestänge der so zusammengefassten Wattgestängeanordnung problemlos im Wesentlichen in ein und derselben Ebene angeordnet werden, was nochmals Bauraum einspart. Auch bei dieser Ausführungsform sind die in die entsprechenden Anbindungsteile am Fahrzeugchassis eingeleiteten Kräfte aufgrund teilweiser vektorieller Kraftaufhebung geringer, wieder mit der Folge der soeben genannten Vorteile bezüglich Gewicht und Kosten, bzw. bezüglich des Einsatzes von Elastomerlagern für die mögliche Schallisolation.

Nach weiteren Ausführungsformen der Erfindung ist vorgesehen, dass zumindest einer der Lagerpunkte, vorzugsweise jedoch mehrere bzw. alle Lagerpunkte der Wattgestängeanordnung als Elastomerlager ausgebildet sind, bzw. dass die Schwenkachsen gemeinsam angelenkter oder einstückiger Querschubstreben-Paare elastisch an Massekörper bzw. Unterbau angebunden sind.

Die Ausbildung eines oder mehrerer der Lagerpunkte, oder sogar aller Lagerpunkte der Wattgestängeanordnung als Elastomerlager bringt insbesondere den Vorteil mit sich, dass die Aufhängungseinrichtung auf diese Weise besonders robust und widerstandsfähig ausgeführt werden kann, wobei sich jedoch gleichzeitig der Wartungsbedarf auf ein Minimum reduziert. Zudem ergibt sich so auch eine zusätzliche Vibrationsdämpfung im Mikrobereich, die sowohl die Lager- und Materialbelastungen verringert, als auch - insbesondere im Fall der Anwendung im Fahrzeugbereich - den mit der Aufhängungseinrichtung erreichbaren Komfort weiter verbessert.

Die elastische Anbindung der Schwenkachsen von gemeinsam angelenkten Querschubstrebenpaaren bringt den bereits weiter oben geschilderten zusätzlichen Vorteil mit sich, dass auf diese Weise - über die gemeinsame Anlenkung der Querschubstrebenpaare - zunächst eine teilweise vektorielle Aufhebung der in den Querschubstreben herrschenden Zug- bzw. Druckkräfte stattfinden kann, bevor dann lediglich noch die verbleibenden, betragsmäßig viel geringeren Restkräfte elastisch in Unterbau bzw. Massekörper einzuleiten sind.

Schließlich kann durch den Einsatz von Elastomerlagern auch verhindert werden, dass es unter bestimmten Einfederungsbedingungen zu strukturellen Verspannungen in den Wattgestängen kommt, und es lassen sich Toleranzen in der Fertigung bzw. im Betrieb auftretende Verkantungen besser auffangen.

Gemäß einer weiteren Ausführungsform der Erfindung ist vorgesehen, dass die Aufhängungseinrichtung nicht nur eine, sondern mehrere Wattgestängeanordnungen umfasst. Damit lässt sich - zunächst einmal unabhängig von der konkreten konstruktiven Ausführung und Anordnung der Wattgestänge - weiter verbesserte Führungsgenauigkeit, höhere Beanspruchbarkeit sowie Erhöhung der Sicherheit, insbesondere im Fall der Anwendung im Fahrzeugbau, erzielen.

Dabei sind bevorzugt die durch die Gelenke einer der Wattgestängeanordnungen aufgespannten Bewegungsebenen senkrecht zu den durch die Gelenke einer weiteren Wattgestängeanordnung aufgespannten Bewegungsebenen angeordnet. Dies bedeutet mit anderen Worten, dass zumindest zwei Wattgestängeanordnungen eingesetzt werden, deren jeweilige Wattgestänge in zueinander senkrecht stehenden Ebenen angeordnet sind. Auf diese Weise lässt sich der Bewegungsfreiheitsgrad des Massekörpers - beispielsweise einer Fahrzeugkabine - effektiv auf Bewegungen entlang lediglich einer Raumrichtung (beispielsweise entlang der vertikalen Hauptstoßrichtung des Chassis) beschränken, während Bewegungen entlang der beiden anderen Raumrichtungen ausgeschlossen sind. Auch unerwünschte Rotationen des Massekörpers um zumindest zwei Achsen des kartesischen Koordinatensystems, also beispielsweise sowohl Wankbewegungen als auch Nickbewegungen einer Fahrzeugkabine, lassen sich auf diese Weise zuverlässig unterbinden.

Im Folgenden wird die Erfindung anhand lediglich Ausführungsbeispiele darstellender Zeichnungen näher erläutert. Dabei zeigt:
- **Fig. 1**: in schematischer Darstellung eine Ausführungsform einer Aufhängungsanordnung gemäß der vorliegenden Erfindung in Neutralstellung;
- **Fig. 2**: in einer **Fig. 1** entsprechenden Darstellung die Aufhängungseinrichtung gemäß **Fig. 1** in Aktivierungsstellung im Fall einer Wankbewegung;
- **Fig. 3**: in einer **Fig. 1** und **2** entsprechenden Darstellung und Ansicht eine Aufhängungseinrichtung gemäß einer weiteren Ausführungsform;
- **Fig. 4**: in einer **Fig. 1** bis **3** entsprechenden Darstellung und Ansicht eine Aufhängungseinrichtung gemäß einer dritten Ausführungsform;
- **Fig. 5**: in einer **Fig. 1** bis **4** entsprechenden Darstellung und Ansicht eine Aufhängungseinrichtung gemäß einer vierten Ausführungsform der Erfindung; und
- **Fig. 6**: in einer **Fig. 1** bis **5** entsprechenden Darstellung und Ansicht eine Aufhängungseinrichtung gemäß einer fünften Ausführungsform, mit einstückigen Querschubstrebenpaaren.

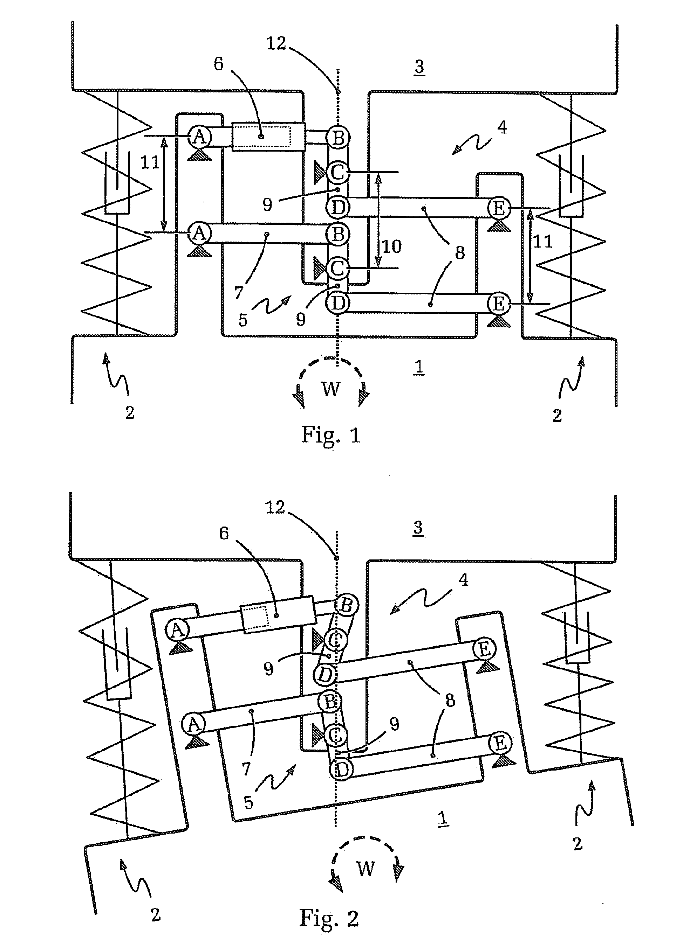

**Fig. 1** zeigt in höchst schematischer Darstellung eine Ausführungsform einer Aufhängungsanordnung gemäß der vorliegenden Erfindung. Man erkennt zunächst einen Unterbau 1 und einen schematisch angedeuteten, mit dem Unterbau 1 über eine Feder-/Dämpfer-Anordnung 2 verbundenen Massekörper 3. Dabei soll der Unterbau bei der dargestellten Ausführungsform den vorderen Bereich des Chassis 1 eines Lastkraftwagens darstellen, während der angedeutete Massekörper für das Fahrerhaus 3 des Lastkraftwagens steht. Die Fahrtrichtung verläuft dabei senkrecht zur Zeichenebene.

Man erkennt in **Fig. 1**, dass die Verbindung zwischen Fahrerhaus 3 und Chassis 1 außer zwei Feder-/Dämpfer-Einrichtungen 2 zwei Wattgestänge 4, 5 umfasst. Erkennbar wird, jedes der Wattgestänge 4, 5 fünf Gelenke umfasst, die mit den Buchstaben A, B, C, D, E bezeichnet sind. Von den Gelenken A bis E sind bei der dargestellten Ausführungsform A und E rahmenfest, wohingegen C jeweils fahrerhausfest ist. Die Gelenkpunkte A bis E jedes Wattgestänges sind dabei durch eine Anordnung aus zwei Querschubstreben 6, 7, 8 und einem zentralen Watt'schen Lenker 9 miteinander verbunden.

Aufgrund der besonderen - für sich genommen bekannten - Kinematik der Wattgestänge 4 bzw. 5 gemäß **Fig. 1** werden dabei die seitlichen Querbewegungen des Fahrerhauses 3 relativ zum Chassis 1 jeweils über die Gelenke A, C und E der beiden Wattgestänge 4, 5 abgestützt, während die Wattgestänge 4, 5 Relativbewegungen von Fahrerhaus 3 und Chassis 1 entlang der Vertikalen hingegen ungehindert zulassen.

Dies hängt damit zusammen, dass der mittlere Drehpunkt C des jeweiligen Watt'schen Lenkers 9 aufgrund seiner Führung durch die beiden ihm zugeordneten Querschubstreben 6 bzw. 7 und 8 - die hierzu die gleiche Länge aufweisen müssen, und deren äußere Anlenkpunkte A und E einen vertikalen Abstand 11 aufweisen müssen, der der Länge des Watt'schen Lenkers 9 entspricht - seine durch die punktierte Linie 12 in Fig. 1 angedeutete vertikale Bewegungsbahn nicht verlassen kann. Hierdurch werden Fahrerhaus 3 und Chassis 1 zunächst einmal stets in der dargestellten, gegenseitig übereinander zentrierten Lage gehalten. Eine relative Querbewegung des Fahrerhauses 3 relativ zum Chassis 1 findet nicht statt.

Auftretende statische oder dynamische Querkräfte werden somit unmittelbar über die Querschubstreben 6 bzw. 7 und 8, über die Watt'schen Lenker 9 sowie über die Gelenke A bis E zwischen Fahrerhaus 3 und Chassis 1 übertragen, so dass - jedenfalls im Bereich der Wattgestänge 4 bzw. 5, bei der vorliegenden Ausführungsform also beispielsweise im hinteren Bereich des Fahrerhauses 3 - keine weitere seitliche Führung oder Abstützung des Fahrerhauses 1 erforderlich ist. Die Vertikalbewegung zwischen Fahrerhaus 3 und Chassis 1 bleibt somit aufgrund der freien vertikalen Beweglichkeit der jeweiligen Watt'schen Lenker 9 vollständig unbehindert, und wird wie vorgesehen lediglich durch die Feder-/Dämpfer-Anordnungen 2 aufgenommen bzw. abgefangen.

Die in den Fig. dargestellten Wattgestängeanordnungen umfassen dabei jeweils zwei separate Wattgestänge 4 und 5, deren jeweilige Geradführungsrichtungen 12 (punktierte Linie in Fig. 1) übereinstimmen, und deren zwei durch die Lage der jeweiligen Lenker 6, 7, 8 bzw. der Gelenkpunkte A bis E festgelegte Bewegungsebenen parallel zueinander verlaufen, und bei den dargestellten Ausführungsformen damit annäherungsweise mit der Zeichenebene zusammenfallen.

Derartige Wattgestängeanordnungen mit zwei vertikal beabstandet angeordneten Wattgestängen 4 und 5 besitzen insbesondere den Vorteil, dass sich so nicht nur eine Geradführung des Fahrerhauses 3 relativ zum Chassis 1 realisieren lässt, sondern dass auf diese Weise auch eine Stabilisierung gegenüber Rotationsbewegungen - sprich gegenüber Wankbewegungen W gemäß **Fig. 2** - erfolgen kann.

Dies liegt darin begründet, dass die beiden gemäß Fig. 1 bis 5 mit gegenseitigem vertikalem Abstand 10 zwischen Chassis 1 und Fahrerhaus 3 angeordneten Wattgestänge 4 und 5 nicht nur - wie bei einem einzelnen Wattgestänge - Querkräfte übertragen können. Vielmehr lassen sich auf diese Weise aufgrund des als Hebelarm wirkenden vertikalen Abstandes 10 zwischen den beiden Wattgestängen 4 und 5 auch Drehmomente übertragen, die um die Längsachse des Fahrzeugs wirken, bei denen es sich also um Wankmomente W gemäß Fig. 2 bis 5 handelt.

Dies bedeutet mit anderen Worten, dass das Fahrerhaus 3 bei den dargestellten Ausführungsbeispielen zunächst lediglich noch die (erwünschten) vertikalen Ausgleichsbewegungen entlang der punktierte Linie 12 relativ zum Chassis 1 ausführen kann, dass jedoch seitliche Relativbewegungen bzw. Rotationen W des Fahrerhauses 3 gegenüber dem Chassis 1 dank der dargestellten Wattgestängeanordnung 4, 5 unterbunden werden.

Dies führt wie eingangs beschrieben jedoch dazu, dass Chassis 1 und Fahrerhaus 3 bezüglich der Wankmomente bzw. Wankbewegungen W miteinander weitgehend starr gekoppelt sind, so dass bei einer Schrägstellung des Chassis sich diese Schrägstellung - möglicherweise unerwünscht - auch auf das Fahrerhaus überträgt.

Dieses Problem wird erfindungsgemäß jedoch dadurch gelöst, dass zumindest einer der Lenker der Wattgestängeanordnung aktuatorisch längenverstellbar ausgebildet ist. Bei der dargestellten Ausführungsform ist dies der Lenker 6 jeweils des oberen Wattgestänges 4. Man erkennt in der schematischen Darstellung der Figuren 1 bis 5, dass der längenverstellbare Lenker 6 ein Hydraulikelement enthält, das es erlaubt, den Lenker 6 in seiner wirksamen Länge zu verstellen.

In Fig. 2 ist dargestellt, welchen Effekt die Längenverstellung des Lenkers 6 auf die Anordnung aus Chassis 1 und Fahrerhaus 3 besitzt. In Fig. 2 befindet sich das Chassis 1 in einer Schrägstellung, beispielsweise aufgrund einer Schräg- oder Kurvenfahrt. Um das Fahrerhaus 3 trotz der Schrägstellung des Chassis 1 in einer aufrechten, horizontalen Position zu halten, wird der hydraulisch längenverstellbare Lenker 6 des oberen Wattgestänges 4 entsprechend angesteuert, und die wirksame Länge des längenverstellbaren Lenkers 6 wird dementsprechend vergrößert. Dadurch ergibt sich die in Fig. 2 dargestellte Situation, bei der die durch die beiden Wattgestänge 4 und 5 gebildete Parallelführung zwischen Chassis 1 und Fahrerhaus 3 um einen der Schrägstellung des Chassis 1 entsprechenden Winkel nachgeführt wird.

Auf diese Weise lässt sich sicherstellen, dass das Fahrerhaus 3 auch bei Schrägstellungen des Chassis seine horizontale Position beibehält, da die zentralen Anlenkpunkte C der Watt'schen Lenker in diesem Fall auch bei einer Schrägstellung des Chassis 1 Ihre vertikale Position übereinander beibehalten können, vgl. strichlierte Linie 12 in Fig. 2.

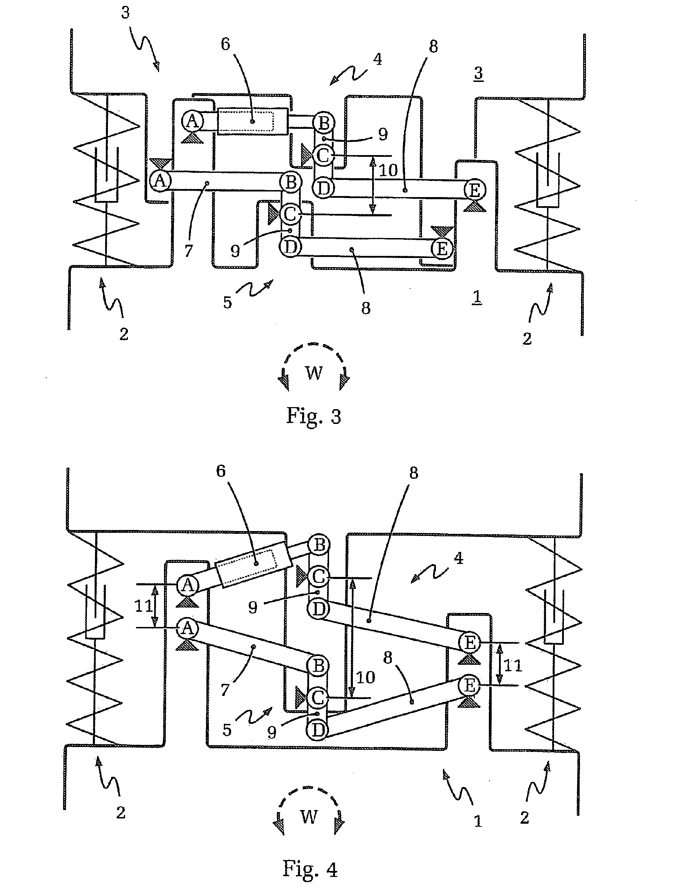

Fig. 3 zeigt eine weitere Ausführungsform einer erfindungsgemäßen Aufhängungseinrichtung mit zwei Wattgestängen. Die Aufhängungseinrichtung gemäß **Fig. 3** unterscheidet sich von der Aufhängungseinrichtung gemäß Fig. 1 und 2 zunächst einmal darin, dass die beiden Wattgestänge 4 und 5 bei der Ausführungsform gemäß **Fig. 3** seitlich versetzt bzw. in Fahrzeugquerrichtung versetzt angeordnet sind. Ferner ist bei der Ausführungsform gemäß **Fig. 3** der Watt'sche Lenker 9 des zeichnungsbezogen oberen Wattgestänges 4 - wie dies zunächst auch bei der Ausführungsform gemäß **Fig. 1** und **2** der Fall ist - mit seinem Drehpunkt C am Fahrerhaus 3 angebunden, während jedoch der Watt'sche Lenker 9 des unteren Wattgestänges 5 hier am Chassis 1 angebunden ist. Diese beiden Unterschiede zur Ausführungsform gemäß **Fig. 1** und **2** führen bei der Ausführungsform gemäß **Fig. 3** dazu, dass die Wattgestänge ineinander verschachtelt und damit besonders platzsparend angeordnet werden können.

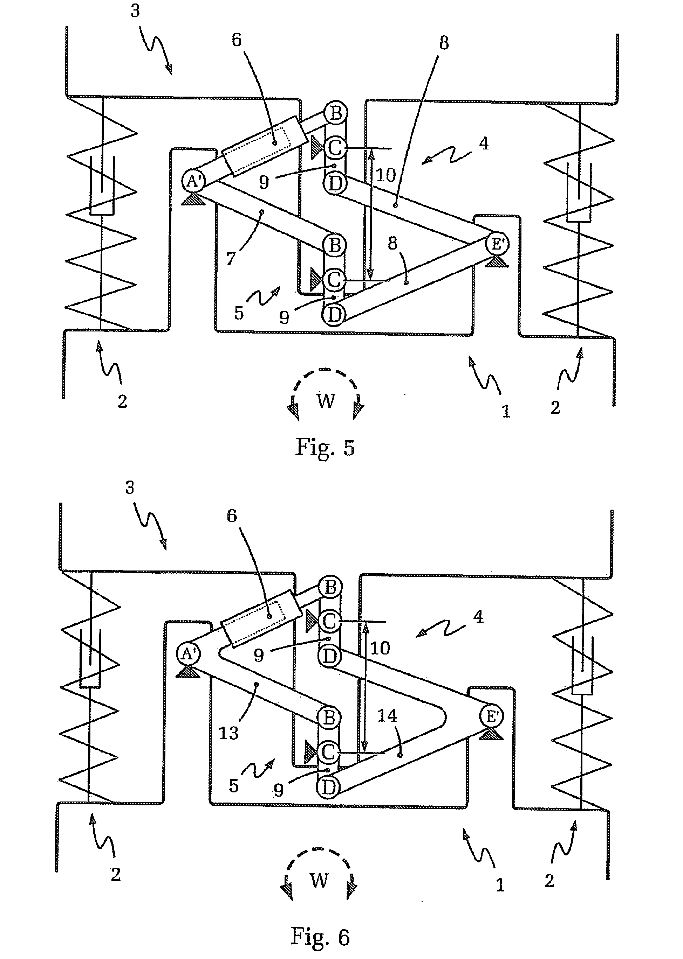

Weitere Ausführungsformen von Aufhängungseinrichtungen beispielsweise für Fahrerkabinen sind in den **Fig. 4** und **5** dargestellt. Die hier dargestellten Ausführungsformen gehen im Prinzip auf die Ausführungsform gemäß **Fig. 1** und **2** zurück. Die Ausführungsformen gemäß **Fig. 4** und **5** unterscheiden sich von der Ausführungsform gemäß **Fig. 1** und **2** jedoch dahingehend, dass der Abstand 10 der Drehpunkte C der beiden Watt'schen Lenker 9 bei den Ausführungsformen gemäß **Fig. 4** und **5** größer ist als die Abstände 11 (Fig. 4) der den Querschubstreben 6, 7, 8 zugeordneten äußeren Anlenkpunkte A, E der beiden Wattgestänge 4 und 5.

Wie die Anmelderin herausgefunden hat, beeinträchtigen diese besonderen geometrischen Verhältnisse bei den Ausführungsformen gemäß **Fig. 5** bzw. **6** die Funktion der Wattgestänge in keiner Weise. Dies bedeutet insbesondere, dass die gewünschte Geradführung der Watt'schen Lenker, bzw. die Geradführung der zentralen Anlenkpunkte C der Watt'schen Lenker, auch bei diesen Ausführungsformen vollständig erhalten bleibt.

Auf der anderen Seite ergibt sich jedoch der Vorteil, dass der durch den hier vergrößerten Abstand 10 der zentralen Anlenkpunkte C der beiden Watt'schen Lenker 9 gebildete Hebelarm 10 proportional zur Vergrößerung des Abstandes 10 dieser beiden Anlenkpunkte C verlängert wird. Dies führt dazu, dass über Chassis 1 oder Fahrerkabine 3 eingeleitete Wankmomente W ebenso nur noch zu proportional verringerten Reaktionskräften führen, was sowohl für die innerhalb der Wattgestänge **4** und 5 wirkenden Kräfte, als auch für die über Anlenkpunkte C in die Fahrerkabine 3 eingeleiteten Kräfte gilt.

Mit anderen Worten können dank der Ausführungsformen gemäß **Fig. 4** und **5** somit sowohl die Wattgestänge 4 und 5 als auch deren Aufhängung C an der Fahrzeugkabine 3 schwächer und damit masseärmer dimensioniert werden.

Die Wattgestängeanordnung gemäß **Fig. 5** unterscheidet sich von der Ausführungsform gemäß **Fig. 4** ferner insofern, als die den Querschubstreben 6, 7, 8 der beiden Wattgestänge 4, 5 zugeordneten äußeren Anlenkpunkte jeweils paarweise auf einer beiden Wattgestängen 4 und 5 gemeinsamen Schwenkachse bei A' bzw. E' liegen. Dies bedeutet mit anderen Worten, dass der Abstand der äußeren Anlenkpunkt-Paare A bzw. E zwischen den beiden Wattgestängen 4 und 5 bei dieser Ausführungsform nicht wie bei der vorhergehenden Ausführungsform gemäß **Fig. 4** nur um ein gewisses Maß - auf den dortigen Abstand 11 - verringert ist, sondern dass dieser Abstand bei der Ausführungsform gemäß **Fig. 5** gleich null ist. Auf diese Weise teilen sich die äußeren Anlenkpunkt-Paare A bzw. E der Querschubstreben 6, 7 und 8 der beiden Wattgestänge 4, 5 insgesamt nur noch zwei Gelenkachsen bei A' bzw. bei E', anstelle wie in den Ausführungsbeispielen gemäß **Fig. 1** bis **4** vier Gelenkachsen (zweimal A, zweimal E) zu beanspruchen.

Auf diese Weise werden somit Bauelemente, hier insbesondere rahmenseitige bzw. chassisseitige Anlenkungen sowie Lagerachsen, und damit auch Kosten eingespart. Ferner lässt sich die Wattgestängeanordnung auf diese Weise besonders kompakt gestalten und spart somit wertvollen Bauraum ein.

**Fig. 6** schließlich zeigt eine weitere Ausführungsform einer erfindungsgemäßen Aufhängungseinrichtung mit einer Wattgestängeanordnung 4, 5. Die in **Fig. 6** dargestellte Wattgestängeanordnung geht im Wesentlichen auf die Wattgestängeanordnung gemäß **Fig. 5** zurück. Die Ausführungsform gemäß **Fig. 6** unterscheidet sich von der Ausführungsform gemäß **Fig. 5** jedoch insofern, als bei der Wattgestängeanordnung gemäß **Fig. 6** jeweils die beiden zuvor gemäß **Fig. 5** noch an einer gemeinsamen Schwenkachse bei A' bzw. bei E' angelenkten, aber separaten Querschubstreben 6, 7, 8 der beiden Wattgestänge 4, 5 nunmehr paarweise einstückig in Form jeweils einer Kombinationsstrebe 13 bzw. 14 ausgebildet sind.

Diese Ausführungsform, bei der die gemeinsam angelenkten Querschubstreben somit jeweils ein hier einem Dreieckslenker 13, 14 ähnelndes, V-förmiges Bauteil bilden, bringt weitere konstruktive Vereinfachungen sowie zusätzliche Vorteile mit sich. Zunächst einmal wird so die Anzahl der erforderlichen Bauteile weiter maßgeblich reduziert. Insbesondere werden dabei auch nicht mehr vier äußere Schwenklager für vier Querschubstreben, sondern nur noch zwei Lager zur Anbindung der äußeren Anlenkpunkte A', E' der beiden Kombinationsstreben 13, 14 benötigt. Ferner können die beiden auf diese Weise vereinigten Wattgestänge 4, 5 im Wesentlichen in ein und derselben räumlichen Ebene angeordnet werden, was nochmals Bauraum einspart. Schließlich heben sich auf diese Weise auch die innerhalb der Wattgestängeanordnung herrschenden Zug- bzw. Druckkräfte teilweise gegenseitig auf, ohne dass diese Kräfte erst den Umweg über die Anbindung an Chassis bzw. Fahrerkabine gehen müssten.

Die aktive Wankunterdrückung aufgrund des längenverstellbaren Lenkers 6 bleibt dabei auch bei den Ausführungsformen gemäß Fig. 3 bis 6 unverändert erhalten, wie anhand der Fig. 1 und 2 beschrieben.

Im Ergebnis wird damit deutlich, dass dank der Erfindung eine Aufhängungseinrichtung zur federnden Aufhängung eines Massekörpers, beispielsweise einer Lkw-Fahrerkabine, geschaffen wird, mit der sich der gewünschte, insbesondere vertikale Bewegungsfreiheitsgrad der Fahrerkabine platzsparend sowie konstruktiv robust definieren lässt. Gleichzeitig lassen sich unerwünschte Wankbewegungen des Massekörpers bzw. der Fahrzeugkabine - auch im Falle von Wankanregungen des Unterbaus bzw. des Chassis - unterbinden. Die Erfindung ermöglicht damit eine konstruktiv einfache, aktive Wankunterdrückung insbesondere für Fahrzeugkabinen und dergleichen.

### Bezugszeichenliste

- 1: Unterbau, Chassis
- 2: Feder-/Dämpfer-Anordnung
- 3: Massekörper, Fahrerhaus
- 4, 5: Wattgestänge
- 6: Querschubstrebe, aktuatorisch verstellbarer Lenker
- 7, 8: Querschubstreben
- 9: Watt'scher Lenker
- A bis E: Gelenke, Anlenkpunkte
- A', E': Anlenkpunkte, Schwenkachsen
- W: Wankbewegung, Wankmoment
- 10: Abstand, Hebelarm
- 11: Abstand
- 12: Geradführungsrichtung
- 13, 14: Kombinationsstrebe, Dreieckslenker

## Patentansprüche

1. Aufhängungseinrichtung zur federnden Aufhängung eines Massekörpers (3) in form einer Fahrerkabine, relativ zu einem Unterbau (1) in Form eines Fahrzeugchassis, die Aufhängungseinrichtung aufweisend eine zwischen Massekörper (3) und Unterbau (1) angeordnete Feder-/Dämpfer-Anordnung (2) zur Dämpfung von Stößen bzw. Schwingungen, wobei die Aufhängungseinrichtung eine Wattgestängeanordnung mit zwei den Massekörper (3) und den Unterbau (1) relativbeweglich verbindenden, parallel angeordneten Wattgestängen (4, 5) zur Reduktion der Bewegungsfreiheitsgrade des Massekörpers (3) gegenüber dem Unterbau (1) umfasst,
**dadurch gekennzeichnet,**
**dass** zumindest einer der Lenker (6) eines Wattgestänges (4) längenveränderlich ist, wobei die Längenveränderung mittels eines Aktuators erfolgt.

2. Aufhängungseinrichtung nach Anspruch 1,
**dadurch gekennzeichnet,**
**dass** der Aktuator ein hydraulischer Aktuator ist.

3. Aufhängungseinrichtung nach Anspruch 1,
**dadurch gekennzeichnet,**
**dass** der Aktuator ein pneumatischer Aktuator ist.

4. Aufhängungseinrichtung nach Anspruch 1,
**dadurch gekennzeichnet,**
**dass** der Aktuator ein elektrisch angetriebener Aktuator ist.

5. Aufhängungseinrichtung nach einem der Ansprüche 1 bis 4,
**dadurch gekennzeichnet,**
**dass** die Gelenke (A, B, C, D, E) der Wattgestänge (4, 5) im Wesentlichen in einer den Wattgestängen (4, 5) gemeinsamen Bewegungsebene liegen.

6. Aufhängungseinrichtung nach einem der Ansprüche 1 bis 5,
**dadurch gekennzeichnet,**
**dass** die Wattgestänge (4, 5) in Bezug auf ihre gemeinsame Geradführungsrichtung in Fahrzeugquerrichtung versetzt angeordnet sind.

7. Aufhängungseinrichtung nach einem der Ansprüche 1 bis 6,
**dadurch gekennzeichnet,**
**dass** der Befestigungspunkt des Watt'schen Lenkers (9) des ersten Wattgestänges (4) mit dem Massekörper (3), und der Befestigungspunkt des Watt'schen Lenkers (9) des zweiten Wattgestänges (5) mit dem Unterbau (1) verbunden ist.

8. Aufhängungseinrichtung nach einem der Ansprüche 1 bis 7,
**dadurch gekennzeichnet,**
**dass** der Abstand (10) der Drehpunkte (C) der beiden Watt'schen Lenker (9) größer ist als der Abstand (11) der den Querschubstreben (6, 7, 8) zugeordneten äußeren Anlenkpunkte (A, E) der beiden Wattgestänge (4, 5).

9. Aufhängungseinrichtung nach einem der Ansprüche 1 bis 8,
**dadurch gekennzeichnet,**
**dass** die den Querschubstreben (6, 7, 8) der beiden Wattgestängen (4, 5) zugeordneten äußeren Anlenkpunkte jeweils paarweise auf einer den beiden Wattgestängen (4, 5) gemeinsamen Schwenkachse (A', E') liegen.

10. Aufhängungseinrichtung nach Anspruch 9,
**dadurch gekennzeichnet,**
**dass** die an einer gemeinsamen Schwenkachse angelenkten Querschubstreben der beiden Wattgestänge (4, 5) jeweils paarweise einstückig in Form einer Kombinationsstrebe (13, 14) ausgebildet sind.

11. Aufhängungseinrichtung nach einem der Ansprüche 1 bis 10,
**dadurch gekennzeichnet,**
**dass** zumindest einer der Lagerpunkte (A, B, C, D, E) der Wattgestängeanordnung als Elastomerlager ausgebildet ist.

12. Aufhängungseinrichtung nach Anspruch 10 oder 11,
**dadurch gekennzeichnet,**
**dass** die Schwenkachsen (A', E') gemeinsam angelenkter bzw. einstückiger Querschubstreben-Paare elastisch an Massekörper (3) bzw. Unterbau (1) angebunden sind.

13. Aufhängungseinrichtung nach einem der Ansprüche 1 bis 12,
**dadurch gekennzeichnet,**
**dass** die Aufhängungseinrichtung mehrere Wattgestängeanordnungen umfasst, wobei die Bewegungsebenen einer Wattgestängeanordnung senkrecht zu den Bewegungsebenen einer weiteren Wattgestängeanordnung angeordnet sind.

## Claims

1. Suspension device for the resilient suspension of a mass body (3) in the form of a driver's cab relative to a substructure (1) in the form of a vehicle chassis, the suspension device having a spring/damper arrangement (2), which is arranged between the mass body (3) and substructure (1), for damping impacts and vibrations, wherein the suspension device comprises a Watt linkage arrangement with two Watt linkages (4, 5) which connect the mass body (3) and the substructure (1) in a manner movable relative to each other, are arranged in parallel and are intended for reducing the degrees of freedom of movement of the mass body (3) in relation to the substructure (1), **characterized in that** at least one of the links (6) of a Watt linkage (4) is changeable in length, the change in length being carried out by means of an actuator.

2. Suspension device according to Claim 1, **characterized in that** the actuator is a hydraulic actuator.

3. Suspension device according to Claim 1, **characterized in that** the actuator is a pneumatic actuator.

4. Suspension device according to Claim 1, **characterized in that** the actuator is an electrically driven actuator.

5. Suspension device according to one of Claims 1 to 4, **characterized in that** the joints (A, B, C, D, E) of the Watt linkages (4, 5) substantially lie in a plane of movement common to the Watt linkages (4, 5).

6. Suspension device according to one of Claims 1 to 5, **characterized in that** the Watt linkages (4, 5) are arranged offset with respect to the common straight-line direction thereof in the transverse direction of the vehicle.

7. Suspension device according to one of Claims 1 to 6, **characterized in that** the fastening point of the Watt-type link (9) of the first Watt linkage (4) is connected to the mass body (3), and the fastening point of the Watt-type link (9) of the second Watt linkage (5) is connected to the substructure (1).

8. Suspension device according to one of Claims 1 to 7, **characterized in that** the distance (10) between the points of rotation (C) of the two Watt-type links (9) is greater than the distance (11) between the outer points of articulation (A, E) of the two Watt linkages (4, 5), which points of articulation are assigned to the transverse thrust struts (6, 7, 8).

9. Suspension device according to one of Claims 1 to 8, **characterized in that** the outer points of articulation assigned to the transverse thrust struts (6, 7, 8) of the two Watt linkages (4, 5) each lie in pairs on a pivot axis (A', E') common to the two Watt linkages (4, 5).

10. Suspension device according to Claim 9, **characterized in that** the transverse thrust struts of the two Watt linkages (4, 5), which transverse thrust struts are articulated on a common pivot axis, are formed integrally in each case in pairs in the form of a combination strut (13, 14).

11. Suspension device according to one of Claims 1 to 10, **characterized in that** at least one of the bearing points (A, B, C, D, E) of the Watt linkage arrangement is designed as an elastomer bearing.

12. Suspension device according to Claim 10 or 11, **characterized in that** the pivot axes (A', E') of pairs of transverse thrust struts, which are articulated together or are in the form of a single piece, are elastically linked to the mass body (3) and to the substructure (1), respectively.

13. Suspension device according to one of Claims 1 to 12, **characterized in that** the suspension device comprises a plurality of Watt linkage arrangements, the planes of movement of one Watt linkage arrangement being arranged perpendicularly to the planes of movement of a further Watt linkage arrangement.

## Revendications

1. Dispositif de suspension pour la suspension à ressort d'un corps massique (3) sous la forme d'une cabine de conducteur, par rapport à une partie inférieure de carrosserie (1) en forme de châssis de véhicule, le dispositif de suspension présentant un agencement de ressort/amortisseur (2) disposé entre le corps massique (3) et la partie inférieure de carrosserie (1) pour amortir les chocs ou les oscillations, le dispositif de suspension comprenant un agencement de tringlerie de Watt avec deux tringleries de Watt (4, 5) disposées en parallèle, reliant le corps massique (3) et la partie inférieure de carrosserie (1) de manière déplaçable l'un par rapport à l'autre, pour réduire les degrés de liberté de mouvement du corps massique (3) par rapport à la partie inférieure de carrosserie (1),
**caractérisé en ce que**
au moins l'un des bras oscillants (6) d'une tringlerie de Watt (4) est variable en longueur, la variation en longueur s'effectuant au moyen d'un actionneur.

2. Dispositif de suspension selon la revendication 1,
**caractérisé en ce que**
l'actionneur est un actionneur hydraulique.

3. Dispositif de suspension selon la revendication 1,
**caractérisé en ce que**
l'actionneur est un actionneur pneumatique.

4. Dispositif de suspension selon la revendication 1,
**caractérisé en ce que**
l'actionneur est un actionneur à commande électrique.

5. Dispositif de suspension selon l'une quelconque des revendications 1 à 4,
**caractérisé en ce que**
les articulations (A, B, C, D, E) de la tringlerie de Watt (4, 5) se situent essentiellement dans un plan de déplacement commun aux tringleries de Watt (4, 5).

6. Dispositif de suspension selon l'une quelconque des revendications 1 à 5,
**caractérisé en ce que**
les tringleries de Watt (4, 5) sont disposées par rapport à leur direction de guidage rectiligne commune de manière décalée dans la direction transversale du véhicule.

7. Dispositif de suspension selon l'une quelconque des revendications 1 à 6,
**caractérisé en ce que**
le point de fixation du bras oscillant de Watt (9) de la première tringlerie de Watt (4) est connecté au corps massique (3), et le point de fixation du bras oscillant de Watt (9) de la deuxième tringlerie de Watt (5) est connecté à la partie inférieure de la carrosserie (1).

8. Dispositif de suspension selon l'une quelconque des revendications 1 à 7,
**caractérisé en ce que**
la distance (10) des centres de rotation (C) des deux bras oscillants de Watt (9) est supérieure à la distance (11) des points d'articulation extérieurs (A, E) des deux tringleries de Watt (4, 5) associés aux biellettes de poussée transversales (6, 7, 8).

9. Dispositif de suspension selon l'une quelconque des revendications 1 à 8,
**caractérisé en ce que**
les points d'articulation extérieurs associés aux biellettes de poussée transversales (6, 7, 8) des deux tringleries de Watt (4, 5) se situent à chaque fois par paire sur un axe de pivotement (A', E') commun aux deux tringleries de Watt (4, 5).

10. Dispositif de suspension selon la revendication 9,
**caractérisé en ce que**
les biellettes de poussée transversales des deux tringleries de Watt (4, 5) articulées à un axe de pivotement commun sont réalisées à chaque fois par paire d'une seule pièce sous la forme d'une combinaison de biellettes (13, 14).

11. Dispositif de suspension selon l'une quelconque des revendications 1 à 10,
**caractérisé en ce**
**qu'**au moins l'un des points de palier (A, B, C, D, E) de l'agencement de tringlerie de Watt est réalisé sous forme de palier élastomère.

12. Dispositif de suspension selon la revendication 10 ou 11,
**caractérisé en ce que**
les axes de pivotement (A', E') conjointement avec des paires de biellettes de poussée transversales articulées ou d'une seule pièce sont reliés élastiquement au corps massique (3) ou à la partie inférieure de carrosserie (1).

13. Dispositif de suspension selon l'une quelconque des revendications 1 à 12,
**caractérisé en ce que**
le dispositif de suspension comprend plusieurs agencements de tringleries de Watt, les plans de déplacement d'un agencement de tringlerie de Watt étant perpendiculaires aux plans de déplacement d'un autre agencement de tringlerie de Watt.
